# EUROPEAN PATENT APPLICATION

(11) **EP 4 570 994 A1**
(43) Date of publication of application: **18.06.2025**
(21) Application number: 23215629.9
(22) Date of filing: 11.12.2023
(51) Int. Cl.: E02F 3/30

(54) **A CONSTRUCTION EQUIPMENT COMPRISING AT LEAST ONE ELECTRIC ACTUATOR**

(71) Applicant: Volvo Construction Equipment AB, 631 85 Eskilstuna (SE)
(72) Inventor: GATEAU, Alexandre, 73100 Tresserve (FR); MAXANT, Ludovic, 73420 VIVIERS DU LAC (FR); BRUNET, Gauthier, 69003 LYON (FR); GOSTOMSKI, Christophe, 01510 VIRIEU LE GRAND (FR); BENOIT, Laurent, 73800 LA CHAVANNE (FR); MONVAILLIER, Quentin, 73000 JACOB BELLECOMBETTE (FR); SALICUNAJ, Albert, 4153 REINACH (FR)
(74) Representative: Lavoix

(57) **Abstract**

This construction equipment (2) comprises at least one electric actuator (10, 10', 10") to generate a relative movement between a first element and a second element of the construction equipment, including at least an electric motor (12) for driving a carriage (14) in translation according to a longitudinal axis (X), a connecting rod (18) that is articulated at one end on the carriage and that is articulated on the other end to the first element (4, 82, 83), a guiding system for guiding the carriage in translation parallel to the longitudinal axis (X) and a support member (20) to which is fixed the guiding system. Two end fittings (22, 24) are provided respectively at the two longitudinal ends of the support member (20) and connect the support member to the second element (80, 82): A first end fitting (22) is configured so that said second element (80, 82) can freely expand or contract along the longitudinal axis (X) relative to the support member (20), and inversely.

## Description

### TECHNICAL FIELD

The disclosure relates generally to construction equipment/machines. In particular aspects, the disclosure relates to a construction equipment or machine including at least one electric actuator for moving some element of the machine. The disclosure can be applied to excavators, among other vehicle types. Although the disclosure may be described with respect to a particular vehicle, the disclosure is not restricted to any particular vehicle.

### BACKGROUND

In the transport industry, there is a clear trend towards the electrification of vehicles, and thus a move away from the use of fossil fuels that cause greenhouse gas emissions. Electric vehicles also have the advantage of being much quieter than their thermal counterparts. This trend is also spreading to construction equipment.

Traditionally, a construction equipment includes an Internal Combustion Engine (ICE) driving a hydraulic pump which, in turn, pumps oil to hydraulic actuators/cylinders in order to move some part of the equipment, e.g. boom, dipper, blade, bucket, dump body, etc. Today, it is known that the ICE can be replaced by an electric motor drawing energy from a battery pack. Design engineers are also looking for an alternative solution to the hydraulic actuators, considering that the whole hydraulic circuit/system to which they belong has a relatively low efficiency (inferior to 40%). Today, the solution consists of removing the hydraulic pump and of replacing the hydraulic actuators by electric actuators. However, this poses in practice many problems, including the fact that electric actuators/cylinders are very sensitive to mechanical stress, efforts, deformation and shocks to which is subjected the equipment during working conditions.

An obvious solution to problem is to reinforce the framework, so as to avoid deformation of the latter in working conditions. However, this means oversizing the framework, which considerably increases the overall weight of the moving parts. As a result, this would require more powerful and bigger actuators. All in all, this would considerably increase the weight and cost of the machine.

### SUMMARY

According to a first aspect of the disclosure, a construction equipment is provided. Said construction equipment comprises at least one electric actuator to generate a relative movement between a first element and a second element of the construction equipment, including at least an electric motor for driving a carriage in translation according to a longitudinal axis, a connecting rod that is articulated at one end on the carriage and that is articulated on the other end to the first element of the construction equipment, a guiding system for guiding the carriage in translation parallel to the longitudinal axis and a support member to which is fixed the guiding system. Two end fittings are provided respectively at the two longitudinal ends of the support member and connect the support member to the second element. A first end fitting is configured so that said second element can freely expand/stretch or contract along the longitudinal axis relative to the support member, and inversely.

The first aspect of the disclosure may seek to prevent large reaction effort/load from being transmitted to sensitive/fragile components of the actuator, e.g. the electric motor or ball/roller screw. A technical benefit may include that the reaction efforts transmitted to the construction equipment/machine, and ultimately to the carriage, can generate slight movement of the support member relative to second element, e.g. excavator arm, according to the degree of freedom to which it is referred to above, thereby preventing generation of stress, i.e. large axial and/or radial load to spread among actuators parts. Another technical benefit is that a deformation of the second element, e.g. excavator arm, along the longitudinal axis under working conditions does not lead to a deformation of the support member of the actuator as the first end fittings is designed to allow the second element (e.g. excavator arm) to freely expand or contract relative to the support member.

Optionally, in some examples, including in at least one preferred example, the first end fitting is connected to the support member and/or to said second element through a sliding connection along longitudinal axis.

Optionally, in some examples, including in at least one preferred example, the first end fitting is also configured so that the support member can bend, relative to said second element, around a first transversal axis perpendicular to the longitudinal axis.

Optionally, in some examples, including in at least one preferred example, the first end fitting is connected to said second element through a pivot connection around first transversal axis.

Optionally, in some examples, including in at least one preferred example, the first end fitting is also configured so that the second element can bend relative to the support member around a pivot axis perpendicular to the longitudinal axis and to the first transversal axis.

Optionally, in some examples, including in at least one preferred example, the first end fitting is connected to said second element through a pivot connection or a sliding pivot connection about first transversal axis.

Optionally, in some examples, including in at least one preferred example, the second end fitting is configured so that the support member can bend, relative to said second element, around a second transversal axis perpendicular to the longitudinal axis.

Optionally, in some examples, including in at least one preferred example, the first end fitting is also configured so that the support member can twist around a central axis thereof that is parallel to the longitudinal axis.

Optionally, in some examples, including in at least one preferred example, the first end fitting is connected to the support member through a sliding or pivot sliding connection about longitudinal axis.

Optionally, in some examples, including in at least one preferred example, support member is a beam or a tube of any cross-section inside which is received at least a portion of the carriage.

Optionally, in some examples, including in at least one preferred example, support member is arranged inside some hollow part of said second element.

Optionally, in some examples, including in at least one preferred example, the electric motor is overhanging inside or outside said second element.

Optionally, in some examples, including in at least one preferred example, one of the end fittings, for example the second end fitting, is part of a body of the electric motor.

Optionally, in some examples, including at least one preferred example, said second element includes or is made of a truss or a molded structure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary perspective view of a construction equipment according to an example.
**FIG. 2** is another view of **FIG. 1****,** according to an example;
**FIG. 3** and **4** represent in detail an electric actuator of the construction equipment of **FIG. 1** and **2****,** according to a first example;
**FIG. 5** and **6** represent in detail an electric actuator according to a second example;
**FIG. 7** and **8** represent in detail an electric actuator according to a third example.

### DETAILED DESCRIPTION

The detailed description set forth below provides information and examples of the disclosed technology with sufficient detail to enable those skilled in the art to practice the disclosure.

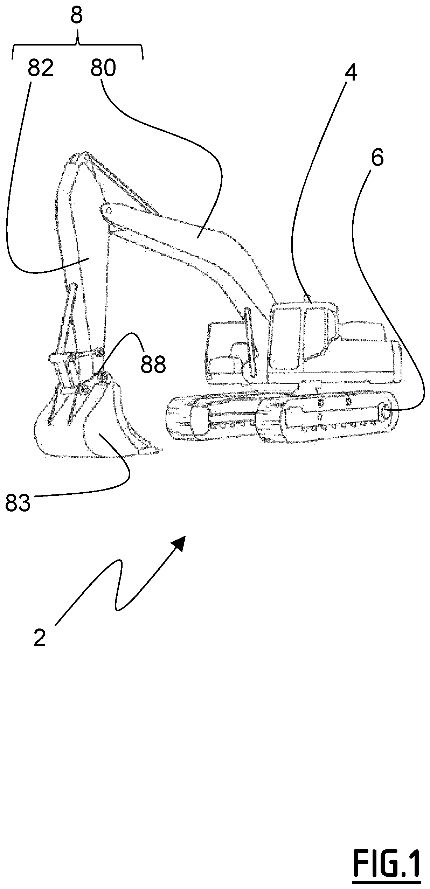

**FIG. 1** is an exemplary perspective view of a construction equipment or machine 2 according to an example. In this example, the construction equipment 2 is an excavator. Obviously, and as mentioned above, the disclosure is not limited to this particular example as it can be applied to any other construction equipment, such as loader, bulldozer, dump truck, rigid or articulated hauler, etc.

In this paper, and according to common definition, a pivoting movement is defined as a rotational movement around a vertical axis, while a tilting movement is defined as a rotational movement around a horizontal axis.

The construction equipment 2 comprises a lower frame equipped with ground connecting means 6 which, as their name indicates, connect the equipment to the ground or ground surface and enable said equipment to move relative to the ground. In the example, these means 6 consist of a pair of continuous tracks, e.g. caterpillars tracks 6. In a variant not shown, caterpillars could be replaced by four or more wheels. Construction equipment 2 also comprises an upper frame 4 that can be pivoted relative to lower frame around a vertical axis. The upper frame 4 can include a cab for the driver.

The construction equipment 2 includes an excavator arm 8 comprising a boom 80 that is rotatable/tiltable relative to the upper frame 4 and a dipper 82 (also known as "stick") that is rotatable/tiltable relative to the boom 80. Besides, a tool 83, such as a bucket, is removably attached to the end of the dipper 82. In a variant not shown, tool 83 could be something other than a bucket, e.g. a hammer or a fork.

According to one example, the excavator arm 8 is made of metal sheets assembled together by welding and/or fastening. In other examples, the arm 8 could be made of a truss (i.e. rigids bars) and/or molded components.

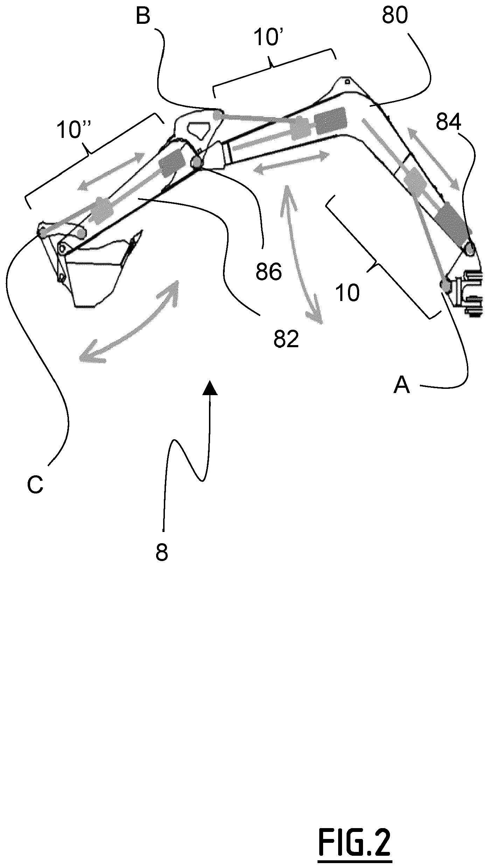

In reference to figures 1 and 2, Numeral reference 84 denotes the articulation (or hinge) between boom 80 and upper frame 4, Numeral reference 86 denotes the articulation (or hinge) between boom 80 and dipper 82 and Numeral reference 88 denotes the articulation between tool 83 and dipper 82 (Cf. Figure 1). In known manner, the articulations 84, 86 and 88 allow tilting the boom 80, dipper 82 or tool 83.

The construction equipment/machine 2 is specific in that it is at least partially electric/electrically-driven. As a result, construction equipment 2 is preferably devoid of any internal combustion engine. The machine includes an Electrical Energy Storage (EES) System such as Fuel-cell or Lithium-ion battery pack and the continuous tracks or wheels 6 are driven by at least one electric motor. In the example of tracks, two electric motors (not shown) are provided, respectively one for each track 6. In addition, construction equipment 2 may be devoid of any High-Pressure (HP) hydraulic pump and associated hydraulic circuits/actuators: The movements of the excavator arm 8 and tool 83 are preferably achieved thanks to electric actuators 10, respectively three electric actuators 10, 10' and 10" from FIG. 2, whose characteristics are detailed below. In a variant not shown, the machine 2 may include a HP pump and one or more hydraulic cylinders/actuators in combination with the electric actuator(s). For instance, the tool attached at the end of the excavator arm may remain hydraulically driven, same for the tracks/ caterpillars. Also, the machine may include an ICE, e.g. Diesel motor, coupled with an alternator to recharge the battery, e.g. Lithium-ion battery.

In the embodiment of Figures 1 and 2, the excavator 2 includes a first actuator 10 for moving/tilting the boom 80 up and down, a second actuator 10' for moving/tilting the dipper 82 up and down, and a third actuator 10" for moving/tilting the tool 83 up and down. Each electric actuator to which it is referred to can generate/cause a relative movement between a first element and a second element of the construction equipment. In the example, the 'first element' and 'second element' associated with actuator 10 are respectively the upper frame 4 (machine chassis) and the boom 80. The 'first element' and 'second element' associated with actuator 10' are respectively the dipper 82 and the boom 80. Last, the 'first element' and 'second element' associated with actuator 10" are respectively the tool 83 and dipper/stick 82.

Each one of the electric actuators to which it is referred to includes an electric motor 12 for driving a carriage 14 (a portion of which being visible on the figures) in translation along a longitudinal axis X. According to one example, the electric motor 12 engages with a reducer 16, such as a gearbox or belt-drive system. In a preferred example, the electric motor 12 drives a roller screw or ball screw (not visible on the figures), the rotation of which leading to the translation of the carriage 14 along the longitudinal axis X.

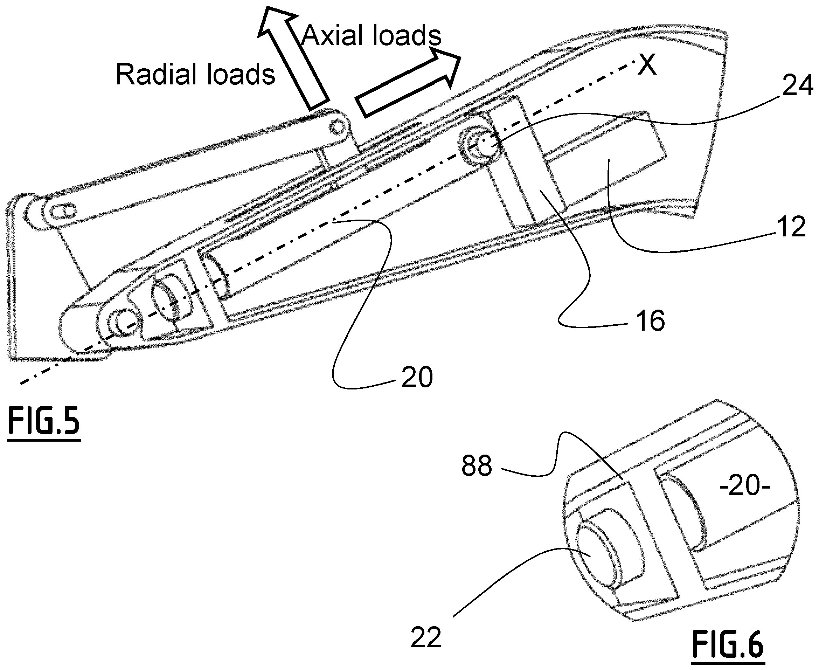

According to one example, the electric motor 12 projects at least partially outside the machine body/framework, e.g. excavator arm 8. In a variant shown on FIG. 5, the electric motor 12 can also be totally integrated inside a hollow volume of the excavator arm 8, as described in EP4036316A1.

The ball screw and roller screw mechanisms are part of general knowledge, which is why no further details are provided herein. Information about such mechanisms can be found on the internet, e.g. https://en.wikipedia.org/wiki/Roller screw or https://en.wikipedia.ors/wiki/Ball screw, the content of which being incorporated herein. The main advantage of such systems is that rotational motion is converted into translational motion with low friction.

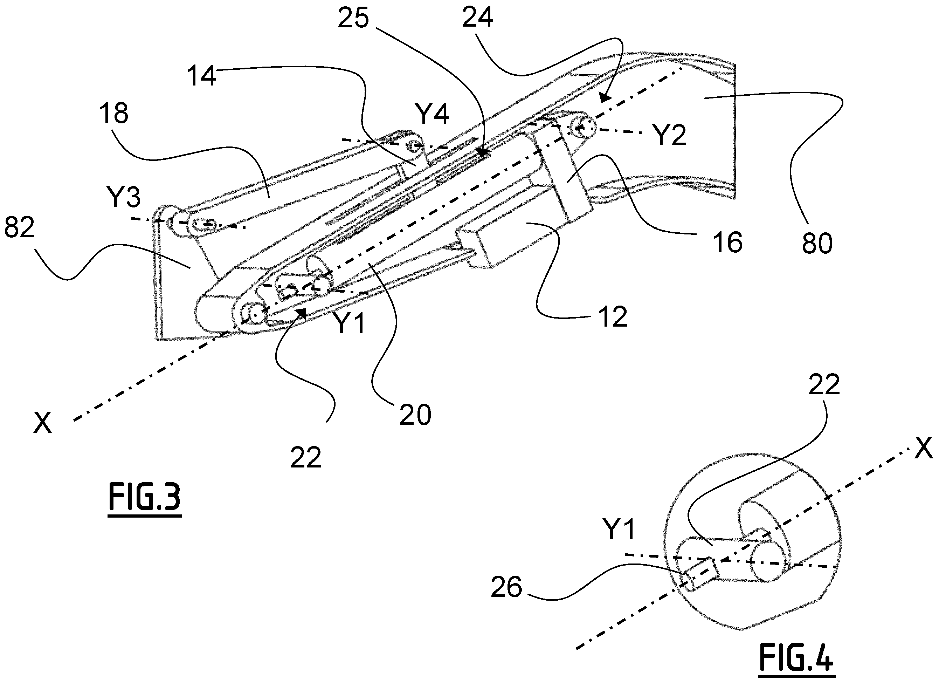

Each actuator includes a connecting rod 18 that is articulated at one end on the carriage 14 and that is articulated on the other end to the first element of the equipment, which can be the upper frame 4, dipper 82 or tool 83. In reference to **FIG. 3****,** axes Y3 and Y4 represent respectively the articulation axis between connecting rod 18 and some other part of the construction equipment 2, e.g. dipper 82 and the articulation axis between connecting rod 18 and carriage 14. Axes Y3 and Y4 are parallel and both perpendicular to longitudinal axis X (i.e. transversal).

A rail or other guiding system is provided for guiding the carriage in translation. According to one example, the rail system includes at least one metallic profile, e.g. stainless steel profile, on which the carriage is fitted. Examples of guiding rail systems can be found on the internet and in EP 4036316 A1, the content of which being incorporated herein. Guiding rail systems are therefore part of general knowledge, which is why no further details are mentioned herein.

Each actuator assembly 10 further includes a support member 20 to which is fixed the guiding system. In the example, the guiding system is not visible on the drawings but it can be, for instance, inside or outside support member 20.

Preferably, support member 20 is arranged inside the second element to which it is referred to, e.g. inside the boom 80 or dipper 82. Indeed, and considering that the excavator arm 8 is made of metal sheets assembled together, such metal sheets together delimit some unoccupied volume that can be used for fitting at least partially the actuators 10. The same applies for the configuration in which the excavator arm 8 would be made of molded parts or of a truss as the truss beams together define some enclosed volume.

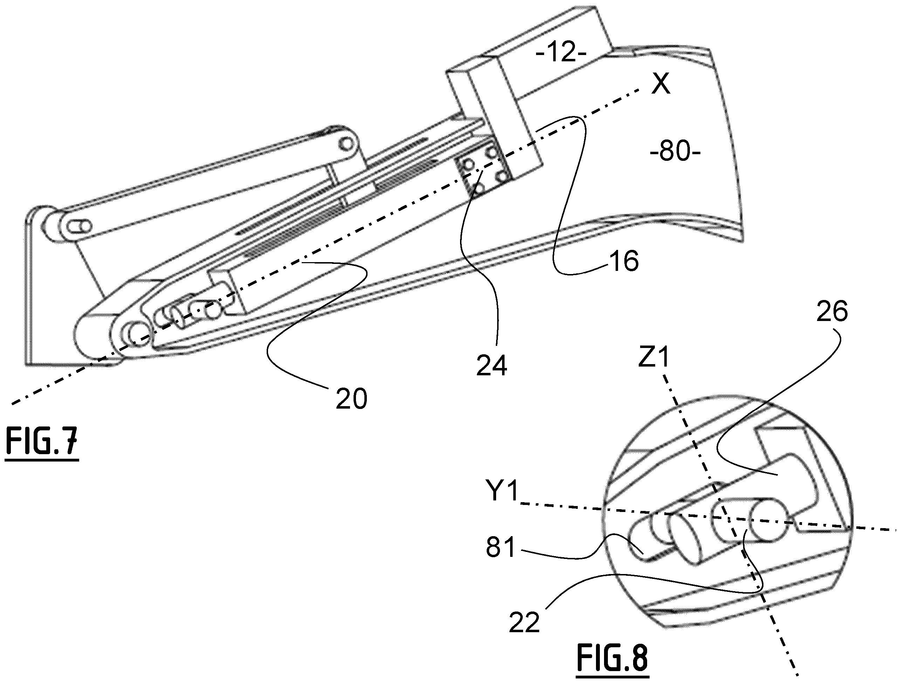

Two end fittings 22, 24 are provided/arranged at the two longitudinal ends of the support member 20 and connect the support member 20 to a second element of the construction equipment, e.g. boom 80 or dipper 82. According to one example, the support member 20 is a tube inside which is received the ball screw/roller screw. Optionally, the rail system is also fitted inside the support member 20 (which is why it is not visible on the figures). In a variant not shown, the guiding system could also be fitted outside the support member 20. Preferably, the tube 20 has a circular cross-section but, obviously, the tube cross-section can be different, e.g. of square or rectangular cross-section, as shown on FIG.7.

Also, according to a preferred example, the carriage 14 includes a portion housed inside the support member 20 and a portion projecting radially outside the tube 20 through a longitudinal slot 25 provided on the support member 20. Said portion of the carriage 14 projecting outside the tube is articulated at one end to the connecting rod 18 to which it is referred to above. Similarly, the excavator arm body 8 also delimits a slot extending parallel to slot 25 to allow some portion of the carriage to project outside the framework.

As their names indicate, the two longitudinal end fittings 22, 24 to which it is referred to above are respectively fitted at the two opposed longitudinal ends of the support member 20 which, itself, extends parallel to/along the longitudinal axis X. The two longitudinal end fittings 22, 24 can be integral or separate/distinct from the support member/tube 20.

A first end fitting 22 among the two longitudinal end fittings is configured so that said second element 80 or 82 can freely expand or contract, i.e. without generating stress, along the longitudinal axis X relative to the support member 20, and inversely. This means that, to some extent, the support member 20 or the first end fitting 22 of the support member 20 can freely move longitudinally relative to second element, without generating stress. In other words, the support member 20 has a degree of freedom along the longitudinal axis X. Such degree of freedom allows the support member 20 to expand or contract relative to second element 80 or 82 with temperature change (dilatation). It also ensures that a deformation of the second element 80 or 82 (under work conditions) according to a longitudinal direction does not result in a deformation of the support member 20. In other words, this makes it possible to prevent that the stress to which the second element 80 or 82 is subjected along longitudinal direction is transmitted to the support member 20. Also, this degree of freedom offers a translational adjustment range at the time of assembly/manufacturing, making the manufacturing process easier as this translational adjustment range allows to compensate for any manufacturing tolerances.

In the example, the second end fitting 24 is arranged on the same side as electric motor 12 relative to support member 20. This means that first end fitting 22 is farther from electric motor 12 than second end fitting 24 (which is very close to motor 12). Obviously, the inverse situation can also be envisaged.

According to a first example represented on **FIG. 3** and **4****,** the support member 20 includes a pin 26 that extends parallel to axis X and that engages inside a complementary through hole of the first end fitting 22, thereby forming a sliding connection. As a result, the support member 20 is not locked in translation along the longitudinal axis X with respect to said first end fitting 22. In other words, the first end fitting 22 is connected to the support member 20 through a sliding connection.

According to a preferred example, the first end fitting 22 is also configured so that the support member 20 can bend around a first transversal axis Y1 perpendicular to the longitudinal axis X in relation with the second element. This means that, under load conditions in which the carriage 14 is subjected to axial and/or radial efforts, the support member 20 can locally rotate around said first transversal axis Y1 (relative to second element 80 or 82), resulting in a bending deformation of the support member 20 that occurs locally around the first transversal axis Y1, as the other end of the support member is not free/overhanging.

In accordance with the example of **FIG. 3** and **4****,** the first end fitting 22 is a trunnion or pivot shaft forming a pivot connection with the second element 80 or 82 around a central axis Y1of the trunnion. In detail, the trunnion has two ends that engage each inside a respective hole of the second element 80. The central axis (or revolutionary axis) of the trunnion corresponds to the first transversal axis Y1 to which it is referred to above. In other words, the connection between the first end fitting 22 and the second element 80 includes a degree of freedom around said first transversal axis Y1 perpendicular to the longitudinal axis X so that the support member 20 can bend, to some extent, relative to the second element 80 around said first transversal axis Y1. Accordingly, in such example, the first end fitting 22 is connected to the second element 80 through a pivot connection.

Advantageously, the possibility of movement/deformation along the longitudinal direction between first end fitting 22/support member 20 and second element 80 allows to get rid of stress on support member 20. Indeed, and without such degree of freedom, the support member 20 would be exposed to unwanted stress which could deform it, and affect the sensitive components inside therein, such as the guiding rail(s) or ball/roller screw.

According to the example of **FIG. 3** and **4****,** the second end fitting 24 is configured so that the support member 20 can bend around a second transversal axis Y2 perpendicular to the longitudinal axis X. In accordance with the example of **FIG. 3** and **4****,** the second end fitting 24 is a trunnion or pivot shaft forming a pivot connection with the second element 80 around a central axis of the trunnion. In detail, the trunnion has two ends that engage each inside respective holes of the support member/tube 20 and second element 80. The central axis (or revolutionary axis) of this second trunnion corresponds to the second transversal axis Y2 to which it is referred to above. In other words, the connection between the second end fitting 24 and the second element 80 includes a degree of freedom around said second transversal axis Y2 perpendicular to the longitudinal axis X so that the support member 20 can rotate, to some extent, relative to the second element 80 around said second transversal axis Y2.

Essentially, second end fitting 24 allows to absorb axial loads and possibly radial loads transmitted to the carriage 14 (and therefore to the support member to which are fixed the guiding means/rail(s)). On the other hand, first end fitting 22 allows to handle radial loads transmitted to the carriage, that are loads perpendicular to longitudinal axis X.

Preferably, the first end fitting 22 is also configured so that the support member 20 can twist around its central axis (which is parallel to the longitudinal axis X). Indeed, and in reference to the example of **FIG. 3****,** the pin 26 engaging inside the hole of the first end fitting 22 is of circular section, meaning that it can rotate relative to first end fitting 22 around a central axis parallel to the longitudinal axis X. In other words, the connection between the support member/tube 20 and the first end fitting 22 is a pivot sliding connection. This allows, to some extent, the support member/tube 20 to twist around its central axis.

Obviously, it goes without saying that the degrees of freedom to which it is referred to in this paper only allow the support member 20 to contract/bend/expand/twist under thermal or mechanical deformation under stress of support member 20 relative to second element 80 and inversely.

In the example of **FIG. 3** and **4****,** the electric motor 12 is arranged parallel to the longitudinal axis X (that is ball screw or roller screw rotation axis). Also, the electric motor 12 is located, at a bottom portion, on the opposite side of the connecting rod 18 relative to the tube/support member 20. In addition, the electric motor 12 extends in direction of first end fitting 22. As a result, the electric motor 12, the reducer 16 and the tube 20 form together a U-shape.

In the example of **FIG. 3** and **4****,** the electric motor 12 is overhanging, meaning that it is held at only one end, corresponding to the connection with the reducer 16.

According to a second example represented on **FIG. 5** and **6****,** the second element 80 comprises some kind of stiffener or plate 88 that extends in a plane perpendicular to longitudinal axis X and that delimits a central hole inside which is received the first end fitting 22. In detail, the first end fitting 22, which is of cylindrical shape, can slide relative to the second element plate 88 and/or relative to the support member/tube 20. Preferably, the first end fitting 22 is also configured so that the support member 20 can twist around a central axis thereof (its central axis, which is parallel to the longitudinal axis X). The second end fitting 24 is a male trunnion connection, part of the body of the support member 20, allowing the support member 20 to bend relative to the second element 80. In a variant not shown, a female trunnion arrangement could also be envisaged.

In the example of **FIG. 5** and **6****,** the electric motor 12 is arranged parallel to the longitudinal axis X (that is parallel to the ball screw or roller screw rotation axis). Also, the electric motor 12 is located below the support member 20, on the opposite side of the connecting rod 18 relative to the tube/support member 20. In addition, the electric motor 12 extends away from the first end fitting 22. As a result, the electric motor 12, the reducer 16 and the tube 20 form together a Z-shape.

According to a third example represented on **FIG. 7** and **8****,** the first end fitting 22 is also a pivot shaft/trunnion that extends along a transversal direction Y1 perpendicular to the longitudinal axis X and that includes two opposed ends engaging inside longitudinal slots 81 (or oblong holes) of the second element 80, thereby forming a sliding connection between the first end fitting and second element. Oblong holes 81 extend along the longitudinal axis X so that the support member 20 can expand or contract (to some extent) relative to second element 80 and inversely.

According to this example, support member 20 includes a pin 26 delimiting a through hole for the passage of the pivot shaft/trunnion 22, resulting in that the pin 26 and the trunnion 22 together form an articulation. Also, and assuming that the pin or trunnion 22 is not tightly fitted inside the through hole of the pin 26, the pin 26 and accordingly the support member 20, can locally slide along trunnion 22.

Second end fitting 24 is directly fastened/fixed to the second element 80, e.g. using bolts. As a result, connection between the second element and second end fitting 24 is a rigid connection without any degree of freedom.

In the example of **FIG. 7** and **8****,** the electric motor 12 is arranged parallel to the longitudinal axis X (that is ball screw or roller screw rotation axis). Also, the electric motor 12 is located above the support member 20, on the same side as the connecting rod 18 relative to the tube/support member 20. In addition, the electric motor 12 extends away from the first end fitting 20. As a result, the electric motor 12, the reducer 16 and the tube 20 form together a Z-shape.

Further, in the example of **FIG. 7** and **8****,** the first end fitting 22 is configured so that the support member 20 cannot twist around a central axis X thereof as there is no degree of freedom around said central axis.

In a variant not shown, the support member can be a beam (e.g. a truss beam) forming a support for fixing/fastening the guiding system. As for previous examples/embodiments, two longitudinal end fittings are provided at the opposed ends of the beam in order to achieve the connection with the second element. In this example, the two end fittings are each formed by a pivot shaft/trunnion engaging in two respective holes of the second element, thereby forming a pivot connection.

According to another variant not shown, the electric motor 12 is fixed to the second end fitting 24 which, itself, comprises a pivot shaft or trunnion to enable the support member to bend around a transversal axis Y2 perpendicular to longitudinal axis X. The two ends of the pivot shaft or trunnion are fitted into corresponding holes of the second element. As a result, the electric motor 12 is not overhanging. This configuration, which can be referred to as a `Combined pin' configuration, is particularly advantageous in case a large/heavy electric motor is used, e.g. on large excavators or the like, regardless if it is mounted parallel to the axis X, or directly on the axis X (meaning using a linear gear box or a torque motor).

According to another variant not shown, the first end fitting is connected to the second element through an eccentric mechanism, comprising a disc delimiting a circular hole with its center offset from that of the disc. The disc is housed inside an aperture of the second element and is free to rotate around its center axis with respect to the second element. The first end fitting consists, in such example, in a pivot shaft or trunnion extending along an axis perpendicular to longitudinal axis X. Said pivot shaft can be part of the support member. The two ends of the pivot shaft are received inside the respective holes of two discs as described above. As a result, and since each disc is free to rotate inside its receptacle/housing (similarly to a bearing), the support member can freely contract or expand relative to the second element, according to a longitudinal direction (and inversely). In detail, a contraction or an expansion/stretching of the support member relative to second element leads to the rotation of the two discs over an angle that depends on deformation degree. Thanks to the eccentric, a contraction or extension of the support member is transformed into a displacement of the pivot shaft in a longitudinal plane, that is a plane perpendicular to a transversal axis such as the axis of trunnion.

According to another variant not shown, a ball joint is used to connect the support member to the first end fitting. In detail, one end of the support member is a ball that is received inside a spheric receptacle so that the support member is free to rotate around any direction with respect to first end fitting.

According to another variant not shown, the electric motor 12 extends perpendicular to the longitudinal axis X. As a result, the electric motor 12, the reducer 16 and the tube 20 form together a L-shape. Depending on packaging requirement, the motor 12 can also extend parallel to Y-axis/direction (left/right) or parallel to Z-axis/direction (top/down).

According to another variant not shown, the construction equipment to which it is referred to is a dump truck or hauler, in which the electric actuator is used to tip the basket/dump body. As a result, the 'first element' to which it is referred to is the basket, while the 'second element' is the vehicle chassis.

### List of Examples:

Example 1: A construction equipment comprising at least one electric actuator to generate a relative movement between a first element and a second element of the construction equipment, including an electric motor for driving a carriage in translation according to a longitudinal axis, a connecting rod that is articulated at one end on the carriage and that is articulated on the other end to the first element of the construction equipment, a guiding system for guiding the carriage in translation parallel to the longitudinal axis and a support member to which is fixed the guiding system, wherein two end fittings are provided respectively at the two longitudinal ends of the support member and connect the support member to the second element of the construction equipment and wherein a first end fitting is configured so that said second element can freely expand or contract along the longitudinal axis relative to the support member, and inversely.

Example 2: The construction equipment according to Example 1, wherein the first end fitting is connected to the support member and/or to said second element through a sliding connection along longitudinal axis.

Example 3: The construction equipment according to Example 1 or 2, wherein the first end fitting is also configured so that the support member can bend, relative to said second element, around a first transversal axis perpendicular to the longitudinal axis.

Example 4: The construction equipment according to Example 3, wherein the first end fitting is connected to second element through a pivot connection around first transversal axis.

Example 5: The construction equipment according to any previous Example, wherein the first end fitting is also configured so that the second element can bend relative to the support member around a pivot axis perpendicular to the longitudinal axis and to the first transversal axis.

Example 6: The construction equipment according to any one of Examples 3 to 5, wherein the first end fitting is connected to said second element through a pivot connection or a sliding pivot connection about first transversal axis.

Example 7: The construction equipment according to any previous Example, wherein the second end fitting is configured so that the support member can bend, relative to second element, around a second transversal axis perpendicular to the longitudinal axis.

Example 8: The construction equipment according to any previous Example, wherein the first end fitting is also configured so that the support member can twist around a central axis thereof that is parallel to the longitudinal axis.

Example 9: The construction equipment according to any previous Example, wherein the first end fitting is connected to support member through a sliding or pivot sliding connection about longitudinal axis.

Example 10: The construction equipment according to any previous Example, wherein support member is a beam or a tube of any cross-section inside which is received at least a portion of the carriage.

Example 11: The construction equipment according to any previous Example, wherein support member is arranged inside some hollow part of said second element.

Example 12: The construction equipment according to any previous Example, wherein the electric motor is overhanging inside or outside said second element.

Example 13: The construction equipment according to any one of Examples 1 to 11, wherein one of the end fittings, for example the second end fitting, is part of a body of the electric motor.

Example 14: The construction equipment according to any previous Example, wherein said second element includes or is made of a truss or a molded structure.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A construction equipment (2) comprising at least one electric actuator (10, 10', 10") to generate a relative movement between a first element and a second element of the construction equipment, including at least:
- an electric motor (12) for driving a carriage (14) in translation according to a longitudinal axis (X);
- a connecting rod (18) that is articulated at one end on the carriage and that is articulated on the other end to the first element (4, 82, 83);
- a guiding system for guiding the carriage in translation parallel to the longitudinal axis (X); and
- a support member (20) to which is fixed the guiding system,
wherein two end fittings (22, 24) are provided respectively at the two longitudinal ends of the support member (20) and connect the support member to the second element (80, 82) and wherein a first end fitting (22) is configured so that said second element (80, 82) can freely expand or contract along the longitudinal axis (X) relative to the support member (20), and inversely.

2. The construction equipment according to claim 1, wherein the first end fitting (22) is connected to the support member (20) and/or to said second element (80, 82) through a sliding connection along longitudinal axis (X).

3. The construction equipment according to any one of claims 1 or 2, wherein the first end fitting (22) is also configured so that the support member (20) can bend, relative to said second element, around a first transversal axis (Y1) perpendicular to the longitudinal axis.

4. The construction equipment according to claim 3, wherein the first end fitting (22) is connected to said second element (80, 82) through a pivot connection around first transversal axis (Y1).

5. The construction equipment according to any one of claims 1 to 4, wherein the first end fitting (22) is also configured so that the second element (80, 82) can bend relative to the support member (20) around a pivot axis (Z1) perpendicular to the longitudinal axis and to the first transversal axis (Y1).

6. The construction equipment according to any one of claims 3 to 5, wherein the first end fitting (22) is connected to said second element through a pivot connection or a sliding pivot connection about first transversal axis (Y1).

7. The construction equipment according to any one of claims 1 to 6, wherein the second end fitting (24) is configured so that the support member can bend, relative to said second element, around a second transversal axis (Y2) perpendicular to the longitudinal axis.

8. The construction equipment according to any one of claims 1 to 7, wherein the first end fitting (22) is also configured so that the support member (20) can twist around a central axis thereof that is parallel to the longitudinal axis.

9. The construction equipment according to any one of claims 1 to 8, wherein the first end fitting (22) is connected to the support member through a sliding or pivot sliding connection about longitudinal axis.

10. The construction equipment according to any one of claims 1 to 9, wherein support member is a beam or a tube of any cross-section, inside which is received at least a portion of the carriage.

11. The construction equipment according to any one of claims 1 to 10, wherein support member is arranged inside some hollow part of said second element.

12. The construction equipment according to any one of claims 1 to 11, wherein the electric motor (12) is overhanging inside or outside said second element.

13. The construction equipment according to any one of claims 1 to 11, wherein one of the end fittings (22, 24), for example the second end fitting (24), is part of a body of the electric motor (12).

14. The construction equipment according to any one of claims 1 to 13, wherein said second element includes or is made of a truss or a moulded structure.

## Amended claims

### Amended claims in accordance with Rule 137(2) EPC.

1. A construction equipment (2) comprising at least one electric actuator (10, 10', 10") to generate a relative movement between a first element and a second element of the construction equipment, including at least:
- an electric motor (12) for driving a carriage (14) in translation according to a longitudinal axis (X);
- a connecting rod (18) that is articulated at one end on the carriage and that is articulated on the other end to the first element (4, 82, 83);
- a guiding system for guiding the carriage in translation parallel to the longitudinal axis (X); and
- a support member (20) to which is fixed the guiding system,
wherein two end fittings (22, 24) are provided respectively at the two longitudinal ends of the support member (20) and connect the support member to the second element (80, 82), **characterized in that** a first end fitting (22) is configured so that said second element (80, 82) can freely expand or contract along the longitudinal axis (X) relative to the support member (20), and inversely.

2. The construction equipment according to claim 1, wherein the first end fitting (22) is connected to the support member (20) and/or to said second element (80, 82) through a sliding connection along longitudinal axis (X).

3. The construction equipment according to any one of claims 1 or 2, wherein the first end fitting (22) is also configured so that the support member (20) can bend, relative to said second element, around a first transversal axis (Y1) perpendicular to the longitudinal axis.

4. The construction equipment according to claim 3, wherein the first end fitting (22) is connected to said second element (80, 82) through a pivot connection around first transversal axis (Y1).

5. The construction equipment according to any one of claims 1 to 4, wherein the first end fitting (22) is also configured so that the second element (80, 82) can bend relative to the support member (20) around a pivot axis (Z1) perpendicular to the longitudinal axis and to the first transversal axis (Y1).

6. The construction equipment according to any one of claims 3 to 5, wherein the first end fitting (22) is connected to said second element through a pivot connection or a sliding pivot connection about first transversal axis (Y1).

7. The construction equipment according to any one of claims 1 to 6, wherein the second end fitting (24) is configured so that the support member can bend, relative to said second element, around a second transversal axis (Y2) perpendicular to the longitudinal axis.

8. The construction equipment according to any one of claims 1 to 7, wherein the first end fitting (22) is also configured so that the support member (20) can twist around a central axis thereof that is parallel to the longitudinal axis.

9. The construction equipment according to any one of claims 1 to 8, wherein the first end fitting (22) is connected to the support member through a sliding or pivot sliding connection about longitudinal axis.

10. The construction equipment according to any one of claims 1 to 9, wherein support member is a beam or a tube of any cross-section, inside which is received at least a portion of the carriage.

11. The construction equipment according to any one of claims 1 to 10, wherein support member is arranged inside some hollow part of said second element.

12. The construction equipment according to any one of claims 1 to 11, wherein the electric motor (12) is overhanging inside or outside said second element.

13. The construction equipment according to any one of claims 1 to 11, wherein one of the end fittings (22, 24), for example the second end fitting (24), is part of a body of the electric motor (12).

14. The construction equipment according to any one of claims 1 to 13, wherein said second element includes or is made of a truss or a moulded structure.
